# EUROPÄISCHE PATENTSCHRIFT

(11) **EP 3 227 130 B1**
(45) Veröffentlichungstag und Bekanntmachung des Hinweises auf die Patenterteilung: **16.09.2020**
(21) Anmeldenummer: 15802140.2
(22) Anmeldetag: 01.12.2015
(51) Int. Cl.: B60D 1/62, B60D 1/24, B60D 1/06

(54) **ANHÄNGEKUPPLUNG MIT EINEM SENSOR**
TRAILER COUPLING COMPRISING A SENSOR
ATTELAGE DE REMORQUE MUNI D'UN CAPTEUR

(30) Priorität: 01.12.2014 DE 102014117645; 02.12.2014 DE 102014117712
(43) Veröffentlichungstag der Anmeldung: 11.10.2017
(73) Patentinhaber: WESTFALIA - Automotive GmbH, 33378 Rheda-Wiedenbrück (DE)
(72) Erfinder: SCHEIPS, René, 33605 Bielefeld (DE); SIELHORST, Bernhard, 33378 Rheda-Wiedenbrück (DE); STOCKHAUS, Tim, 33613 Bielefeld (DE)
(74) Vertreter: Patentanwälte Bregenzer und Reule Partnerschaftsgesellschaft mbB
(86) Internationale Anmeldenummer: PCT/EP2015/078249
(87) Internationale Veröffentlichungsnummer: WO 2016/087464

(56) Entgegenhaltungen:
- EP-A1- 0 589 688
- EP-A1- 2 452 839
- WO-A1-2016/046205
- US-A1- 2014 327 229

## Beschreibung

Die Erfindung betrifft eine Anhängekupplung für ein Kraftfahrzeug mit einem Kupplungsarm zum Anhängen eines Anhängers oder zum Tragen eines Lastenträgers gemäß Oberbegriff des Anspruches 1.

Eine derartige Anhängekupplung ist In DE 10 2014 013 812.7 erläutert. Aus dieser Schrift geht hervor, einen Sensor in einer Vertiefung am Kupplungsarm anzuordnen. Der Sensor ist beispielsweise mit Flächen der Vertiefung verklebt oder verschraubt, die sich bei der Belastung durch die an der Anhängekupplung angreifenden Last verformen. Es ist ein Sensor mit zwei Sensorteilen erläutert, deren Abstand sich bei der Belastung und somit Verformung des Tragelements in Gestalt des Kupplungsarms verändert. Durch die Verformung des Tragelements werden die Sensorelemente mechanisch belastet.

EP 2 452 839 A1 erläutert eine Anhängekupplung mit einem Kupplungsarm, bei dem Sensoren in relativ zu einer Seitenkontur des Kugelhalses vertieften Bereichen angeordnet sind.

Es ist daher die Aufgabe der Erfindung, eine verbesserte Anhängekupplung mit einem Sensor zur Erfassung einer Verformung des Tragelements durch eine an dem Kupplungsarm angreifende Last bereitzustellen.

Zur Lösung der Aufgabe ist bei einer Anhängekupplung der eingangs genannten Art vorgesehen, dass sich die Referenzflächen quer zu einem sich bei der Belastung durch die Last verformenden Stützabschnitt des Tragelements erstrecken und sich bei der Verformung des Tragelements aufeinander zu oder voneinander weg bewegen. Weiterhin ist es im Sinne der Erfindung, wenn die Referenzflächen frei von einem Kraftfluss sind, der von dem Stützabschnitt bei der Belastung durch die an dem Tragelement angreifende Last übertragen wird, sich aber bei der Verformung des Tragelements aufeinander zu oder voneinander weg bewegen.

Es ist vorgesehen, dass sich die Referenzflächen bei der Verformung des Tragelements aufeinander zu oder voneinander weg bewegen. Die Referenzflächen erstrecken sich quer, insbesondere rechtwinkelig oder etwa rechtwinkelig, zu einem sich bei der Belastung durch die Last verformenden Stützabschnitt des Tragelements und/oder sind von einem Kraftfluss durch den Stützabschnitt des Tragelements frei, der von dem Stützabschnitt bei der Belastung durch die an dem Tragelement angreifende Last übertragen wird. Im letztgenannten Fall ist es auch möglich, dass die Referenzflächen nicht quer zu dem sich bei Last verformenden Stützabschnitt des Tragelements verlaufen, sondern insgesamt oder zumindest abschnittsweise längs und/oder parallel dazu verlaufen.

Vorzugsweise ist vorgesehen, dass die Referenzflächen quer zu einer Kraftflussrichtung durch den Stützabschnitt des Tragelements verlaufen.

Der in der oder neben der mindestens einen Aussparung angeordnete und/oder messende Sensor ist zweckmäßigerweise vor Umwelteinflüssen geschützt. Insbesondere kann er beispielsweise nicht dadurch beschädigt werden, dass ein Gegenstand an der Kugelstange oder einem sonstigen Tragelement der Anhängekupplung entlang reibt.

In vorteilhafter Ausgestaltung bildet oder umfasst die mindestens eine Aussparung eine Dehnungsfuge oder Dehnfuge. Gegenüberliegende Wände der Dehnungsfuge bilden vorteilhaft die Referenzflächen für den mindestens einen Sensor.

Es ist auch möglich, dass zu den Wänden der Aussparung, beispielsweise der Dehnungsfuge oder Bewegungsfuge, winkelige Flächen, zum Beispiel etwa rechtwinkelige Flächen, Referenzflächen bilden.

Vorteilhaft ist es, wenn sich die Aussparung quer zu einer Längsrichtung des Stützabschnitts und/oder quer zur Kraftrichtung der durch den Stützabschnitt verlaufenden Kraft oder Last erstreckt.

So kann beispielsweise das Tragelement ein Kupplungsarm sein und die Aussparung quer zur Längsrichtung eines Armabschnitts des Kupplungsarms verlaufen. Auf diesem Wege können beispielsweise auf das Kuppelelement wirkende Stützlasten und/oder Zuglasten und/oder Schublasten optimal gemessen werden. Es ist auch möglich, bei einer derartig verlaufenden oder angeordneten Aussparung in Fahrzeugquerrichtung auf den Kupplungsarm oder das Tragelement wirkende Kräfte zu messen. Die Aussparung verläuft beispielsweise in Fahrzeugquerrichtung des Kraftfahrzeugs.

Möglich ist es aber auch, dass beispielsweise zur Messung von derartigen Querkräften, also Kräften die beispielsweise in einer sogenannten Y-Richtung verlaufen, eine Aussparung mit entsprechenden Referenzflächen quer zur Längsrichtung des Tragelements oder Kupplungsarms verläuft. Beispielsweise kann die Aussparung in Fahrzeuglängsrichtung verlaufen.

Vorteilhaft ist also vorgesehen, dass die mindestens eine Aussparung in Fahrzeugquerrichtung oder in Fahrzeuglängsrichtung des Kraftfahrzeugs verläuft.

Möglich ist es aber auch, dass eine Aussparung in Schrägrichtung verläuft, also beispielsweise in einem Winkel zwischen der Fahrzeugquerrichtung und der Fahrzeuglängsrichtung.

Es ist möglich, dass der mindestens eine Sensor vollständig oder ganz in der Aussparung aufgenommen ist. Es ist aber auch möglich, dass der Sensor der Aussparung nur zugeordnet ist, so dass durch den mindestens einen Sensor ein Abstand der Referenzflächen der Aussparung messbar ist. Es ist also eine Ausführungsform denkbar, bei der der Sensor nicht im Zwischenraum oder Innenraum der Aussparung vollständig aufgenommen ist.

Die Referenzflächen können parallel zueinander verlaufen. Es ist aber auch möglich, dass die Referenzflächen einen Schrägverlauf oder eine Winkellage relativ zueinander haben und/oder winkelige Abschnitte und/oder gekrümmte Abschnitte aufweisen.

Die Referenzflächen können bei einer Belastung des Tragelements eine Relativbewegung bezüglich ihrer größten Ausdehnung aufeinander zu oder voneinander weg durchlaufen. Es ist aber auch möglich, dass die Referenzflächen in der Art einer Scherbewegung relativ zueinander beweglich sind.

An einer jeweiligen Referenzfläche können mehrere Sensoren angeordnet sein. Zweckmäßigerweise sind die Sensoren quer zu einer Richtung eines Kraftflusses oder einer Kraftflussrichtung, die durch den Stützabschnitt verläuft, nebeneinander angeordnet.

Die erfindungsgemäße Ausgestaltung ist beispielsweise bei einem Querträger oder einem sonstigen Tragelement einer Anhängekupplung ohne weiteres realisierbar. Besonders bevorzugt ist die Anwendung an einem Kupplungsarm. Aber auch eine Halterung oder Fahrzeughalterung zum Halten des Kupplungsarms oder einer sonstigen Befestigungseinrichtung oder Trageeinrichtung kann in erfindungsgemäße Weise als Tragelement mit entsprechender Sensorik, d.h. erfindungsgemäß angeordneten Aussparungen für die Sensorik, ausgestaltet sein.

Der Kupplungsarm oder das sonstige Tragelement kann selbstverständlich mehrere Sensoren und/oder auch mehrere Aussparungen aufweisen. Somit ist es möglich, an mehreren Orten die Verformung des Tragelements, insbesondere also des Kupplungsarms, zu erfassen.

Die Referenzflächen sind zweckmäßigerweise von einem Kraftfluss frei, der von dem Stützabschnitt bei der Belastung durch die an dem Tragelement angreifende Last übertragen wird. Die Referenzflächen befinden sich vorteilhaft neben einem Kraftfluss, der durch den Stützabschnitt hindurch verläuft. Mithin läuft also der Kraftfluss sozusagen an den Referenzflächen vorbei, sorgt gleichzeitig aber dafür, dass sich die Referenzflächen relativ zueinander bewegen, was der mindestens eine Sensor dann erfasst. Die Referenzflächen können sich also ohne unmittelbare Kraftübertragung oder Verformung relativ zueinander bewegen, wobei erfindungsgemäß der Abstand zwischen diesen Referenzflächen ein Maß oder einen Indikator für die Verformung des Tragelements bildet.

Die Referenzflächen des Stützabschnitts oder Tragelements sind vorteilhaft einstückig mit einem Grundkörper des Stützabschnitts oder Tragelements.

Bevorzugt ist es, wenn sich die Referenzflächen quer, insbesondere rechtwinkelig oder etwa rechtwinkelig quer, zu einer Kraftflussrichtung erstrecken, die durch den Stützabschnitt verläuft.

Es ist aber auch möglich, dass sich eine Referenzfläche oder die Referenzflächen mit zumindest einer Richtungskomponente parallel oder längs der Kraftflussrichtung erstrecken. Insbesondere in diesem Fall ist es vorteilhaft, wenn die Referenzflächen von einem Kraftfluss durch den Stützabschnitt des Tragelements frei sind, der von dem Stützabschnitt bei der Belastung durch die an dem Tragelement angreifende Last übertragen wird.

Zweckmäßigerweise ist vorgesehen, dass mindestens eine der Referenzflächen an einem zungenartigen oder armartigen Indikatorelement vorgesehen ist. Bevorzugt ist es, wenn ein derartiges Indikatorelement frei vor einen Grundkörper des Tragelements vorsteht. Das mindestens eine Indikatorelement bildet also beispielsweise eine Zunge oder einen Arm aus.

Beispielsweise ist es möglich, dass das eine Referenzfläche aufweisende Indikatorelement relativ zu einem weiteren, eine weitere Referenzfläche aufweisenden Indikatorelement bei der Belastung des Tragelements bewegt wird oder die Indikatorelemente insgesamt relativ zueinander beweglich sind. Beide Indikatorelemente können beispielsweise als Zungen oder Arme ausgestaltet sein.

Es ist aber auch möglich, dass nur ein Indikatorelement vorhanden ist, das auf eine bezüglich des Tragelements ortsfeste Referenzfläche hin oder von dieser Referenzfläche weg bewegbar gelagert ist.

Das mindestens eine Indikatorelement ist vorzugsweise mit einem Grundkörper des Stützabschnitts oder des Tragelements einstückig.

Zweckmäßigerweise sind die Referenzflächen an einander zugewandten Stirnseiten der Indikatorelemente angeordnet. Es ist aber auch möglich, dass eine Seitenfläche eines Indikatorelements, die winkelig zu einer Stirnseite ist, eine Referenzfläche bildet. Es ist möglich, dass Referenzflächen bildende Seitenflächen von Indikatorelementen bei einer Belastung des Tragelements durch eine angreifende Last relativ aufeinander zu oder voneinander weg bewegt werden.

Es ist auch möglich, dass eine Referenzfläche an einem nicht durch den Kraftfluss bei Belastung des Tragelements belasteten Vorsprung vorgesehen ist. Es ist zum Beispiel möglich, dass eine der Referenzflächen an einem derartigen Vorsprung vorgesehen ist, während die andere Referenzfläche an einem armartigen Vorsprung vorgesehen ist.

Bevorzugt ist es, wenn die Referenzflächen an einander gegenüberliegenden oder nebeneinander angeordneten vom Kraftfluss freien Indikatorelementen oder Indikator-Armen angeordnet sind.

Ein Sensorelement ist vorteilhaft mit der vom Kraftfluss durch den Stützabschnitt freien Referenzfläche zumindest indirekt bewegungsgekoppelt oder verbunden.

Ein Abstand zwischen den Referenzflächen beträgt beispielsweise maximal 5 cm, bevorzugt maximal 4 cm, insbesondere weniger als 3 cm oder 2cm. Ein besonders günstiger Abstand zwischen den Referenzflächen liegt in einem Bereich von 2-5 mm.

Bei einem Kupplungsarm als Tragelement ist es bevorzugt, wenn die mindestens eine Aussparung für den mindestens einen Sensor in einer Fahrzeugquerrichtung des Kraftfahrzeugs verläuft. Die Fahrzeugquerrichtung ist quer, insbesondere rechtwinkelig quer, zur Fahrzeuglängsrichtung des Kraftfahrzeugs, nämlich der Vorzugsbewegungsrichtung des Kraftfahrzeugs orientiert. Diese Fahrzeugquerrichtung wird auch als Y-Richtung bezeichnet. Die Referenzflächen verlaufen vorzugsweise parallel oder etwa parallel zur Y-Richtung. Diese Anordnung eignet sich in besonderem Maße zur Messung von Stützlasten oder Zuglast, die am Kupplungsarm oder Tragelements angreifen. Die Kraftrichtungen der Stützlast und der Zuglast werden auch als Z-Richtung und X-Richtung bezeichnet.

Eine zweckmäßigerweise Ausführungsform der Erfindung sieht vor, dass mindestens zwei Sensorelemente oder mindestens zwei Sensoren einer einzigen der Referenzfläche zugeordnet sind. Bevorzugt sind Paarungen von jeweils zwei Sensorelementen, die einander gegenüberliegend an der Aussparung oder seitlich neben der Aussparung angeordnet sind. Es ist möglich, dass an oder neben der Aussparung mindestens 2 derartiger Paare von Sensorelementen angeordnet sind.

Besonders bevorzugt ist es, wenn neben oder in einer Aussparung oder Dehnfuge des Tragelements, die sich in der Y-Richtung oder Fahrzeugquerrichtung erstreckt, in Y-Richtung oder Fahrzeugquerrichtung mehrere Sensoren oder Sensorelemente nebeneinander angeordnet sind oder mehrere Sensoren oder Sensorelemente in einer Reihenrichtung nebeneinanderwirkend der Referenzfläche zugeordnet sind.

Vorzugsweise ist eine Reihenanordnung von mindestens zwei Sensoren oder Sensorelementen nebeneinander an einer jeweiligen Referenzfläche vorgesehen. Aber auch eine sozusagen zweidimensionale Anordnung ist möglich, d.h. dass an einer jeweiligen Referenzfläche in zueinander winkeligen Richtungen mindestens zwei Sensoren oder Sensorelemente nebeneinander angeordnet sind oder der Referenzfläche in diesen winkeligen Richtungen zugeordnet sind. Die Sensoren oder Sensorelemente können also beispielsweise linear nebeneinander oder mehrdimensional, zum Beispiel matrixartig, an der jeweiligen Referenzfläche angeordnet sein oder der Referenzfläche in dieser Gestalt zugeordnet sein.

Bevorzugt umfasst die mindestens eine Aussparung eine sich von einer Öffnung an einer Außenoberfläche des Tragelements weg erstreckende Vertiefung oder ist durch die Vertiefung gebildet. Die Referenzflächen sind zweckmäßigerweise zur Öffnung winkelig, beispielsweise orthogonal. An dieser Stelle sei aber bemerkt, dass die mindestens eine Aussparung auch sozusagen in einem Kernbereich des Tragelements vorgesehen sein kann, beispielsweise als eine Art Bohrung. Wenn die Aussparung jedoch an einer Außenoberfläche bzw. von einer Außenoberfläche weg erstreckend ausgestaltet ist, wird dadurch sozusagen eine maximale Verformung durch den Sensor messbar.

Bevorzugt ist die Aussparung schlitzförmig. Die Aussparung ist also vorzugsweise relativ schmal und/oder an einer Nut vorgesehen. Die Nut kann beispielsweise im Querschnitt U-förmig sein. Bevorzugt ist beispielsweise eine Nut, die sich im Bereich ihres Nutbodens verbreitert, wobei die Referenzflächen abseits vom Nutboden, an einem schmaleren Abschnitt, vorgesehen sind. Mithin ist also sozusagen ein erweiterter oder verbreiteter Nutboden vorhanden, der nachfolgend als eine Ausdehnungskavität erläutert ist. Besonders bevorzugt ist beispielsweise eine T-förmige Gestalt, was später noch deutlich wird.

Zwischen dem Stützabschnitt und den Referenzflächen ist zweckmäßigerweise eine Ausdehnungskavität angeordnet oder vorgesehen. Eine Querbreite der Ausdehnungskavität in einer Richtung parallel zu dem Abstand zwischen den Referenzflächen ist zweckmäßigerweise größer als der Abstand zwischen den Referenzflächen.

Der Begriff "Ausdehnungskavität" kann im Sinne einer Ausdehnung oder Aufweitung verstanden werden, aber auch im Sinne einer Stauchung. Mit anderen Worten könnte man auch von einer Stauchungskavität sprechen, um die bidirektionale Beweglichkeit der Referenzflächen, die durch die Ausdehnungskavität bei einer jeweiligen Verformung des Tragelements verbessert ist, zum Ausdruck zu bringen.

Dadurch ist eine besonders große Auslenkung der Referenzflächen relativ zueinander möglich. Die Ausdehnungskavität verläuft beispielsweise winkelig, insbesondere rechtwinkelig zu der vorgenannten Vertiefung, an welcher die Referenzflächen vorgesehen sind.

Die Aussparung und die Ausdehnungskavität können insgesamt eine schlüssellochartige oder ovale oder elliptische oder eiförmige Gestalt haben. Ein breiterer Bereich der in Gestalt eines Schlüssellochs ausgebildeten oder ovalen Kavität oder Ausnehmung bildet dann beispielsweise die Ausdehnungskavität, während der schmalere Bereich die Aussparung für den mindestens einen Sensor darstellt.

Die Aussparung und die Ausdehnungskavität weisen zweckmäßigerweise eine T-förmige Gestalt auf. Beispielsweise bildet die Aussparung einen Längsschenkel, insbesondere einen solchen, der sich von einer Außenoberfläche des Tragelements weg in Richtung zu dessen inneren Bereich erstreckt, wobei die Ausdehnungskavität einen Querschenkel zu dem Längsschenkel bildet, insbesondere einen Querschenkel, der orthogonal oder in einem sonstigen Winkel quer zu dem Längsschenkel verläuft.

Die Aussparung und die Ausdehnungskavität können aber auch eine schlüssellochartige Gestalt haben.

Von dem Stützabschnitt können sozusagen Arme abstehen. Bevorzugt ist es, wenn die Referenzflächen an freien Endbereichen von Armen vorgesehen sind, die von dem Stützabschnitt abstehen. Die Arme sind vorzugsweise L-förmig und/oder weisen zueinander winkelige Schenkel auf.

Bevorzugt ist es, wenn der mindestens eine Sensor nicht vor eine Außenoberfläche des Tragelements vorsteht.

An dieser Stelle sei bemerkt, dass durch eine Anpassung der Ausgestaltung von Ausdehnungskavität und/oder Aussparung, beispielsweise Geometrie und/oder Größe oder dergleichen, die gewünschten Auslenkungsverhältnisse zwischen den Referenzflächen ohne weiteres beeinflussbar und an die jeweiligen messtechnischen oder belastungstechnischen Erfordernisse anpassbar sind. So kann beispielsweise ganz bewusst eine kleine, die Tragfähigkeit des Tragelements wenig beeinflussende Aussparung und/oder Ausdehnungskavität vorgesehen sein. Größere Abstände und/oder eine größere Ausdehnungskavität können zwar einerseits die Tragfähigkeit des Tragelements etwas stärker schwächen, andererseits für größere Auslenkungen der Referenzflächen relativ zueinander sorgen.

Vorteilhaft ist vorgesehen, dass die Anhängekupplung und/oder der mindestens eine Sensor eine Auswerteeinrichtung zur Auswertung mindestens eines Signals des mindestens einen Sensors, insbesondere integral, aufweist. Die Auswerteeinrichtung weist beispielsweise einen Mikroprozessor zur Verarbeitung von Signalen des mindestens einen Sensors und/oder einen Speicher zur Speicherung von Sensorsignalen auf. Bevorzugt ist es, wenn die Auswerteeinrichtung zur Auswertung von Signalen betreffend mindestens eine Kraftrichtung, vorzugsweise mindestens zwei Kraftrichtungen, ausgestaltet ist.

Der mindestens eine Sensor ist zweckmäßigerweise zur Erfassung einer Verformung des Tragelements bei Belastung in Richtung einer vertikalen Achse bei Gebrauch des Tragelements und/oder mindestens einer horizontalen Achse bei Gebrauch des Tragelements ausgestaltet. Beispielsweise ist der mindestens eine Sensor zur Erfassung einer Verformung des Tragelements bei einer Belastung durch eine Stützlast, insbesondere einer auf die Kupplungskugel oder das Kuppelelement wirkenden Stützlast, ausgestaltet. Der mindestens eine Sensor ist zweckmäßigerweise aber auch ergänzend oder alternativ zur Erfassung mindestens einer entlang einer horizontalen Achse wirkenden Kraft, beispielsweise einer Schubkraft oder Zugkraft, insbesondere einer Kraft in Richtung einer Fahrzeuglängsrichtung und/oder in Richtung einer Fahrzeugquerrichtung des Kraftfahrzeugs, ausgestaltet. Mithin ist es also möglich, dass mit dem mindestens einen Sensor auch mehrere Kraftrichtungen erfassbar sind.

Bevorzugt ist es, wenn die Aussparung mit einer Sensoraufnahme kommuniziert, in welcher eine Komponente des mindestens einen Sensors, beispielsweise eine Auswerteeinrichtung zur Auswertung mindestens eines Signals des mindestens einen Sensors, angeordnet oder anordenbar ist. Somit kann also die Sensoraufnahme die Komponente des Sensors, insbesondere die Auswerteeinrichtung, schützen. Die Sensoraufnahme ist beispielsweise als eine Vertiefung, Bohrung oder dergleichen in dem Tragelement ausgestaltet.

Bevorzugt ist es, wenn die Sensoraufnahme von der Ausdehnungskavität gebildet ist oder in anderer Formulierung die Ausdehnungskavität direkt bildet. Somit hat also die Sensoraufnahme sozusagen eine Doppelfunktion, nämlich einerseits mindestens eine Komponente des Sensors zu schützen oder aufzunehmen, andererseits die Ausdehnungseigenschaften bzw. die Auslenkung der Referenzflächen relativ zueinander günstig zu beeinflussen, beispielsweise eine größere Auslenkung der Referenzflächen zu ermöglichen als ohne Vorhandensein der Ausdehnungskavität oder Sensoraufnahme möglich wäre.

Die Sensoraufnahme kommuniziert zweckmäßigerweise mit mindestens einer Durchtrittsöffnung, durch die ein Befestigungselement zur Verbindung mit der in der Sensoraufnahme angeordneten Komponente des mindestens einen Sensors durchsteckbar ist. Das Befestigungselement ist beispielsweise ein Niet, eine Schraube oder dergleichen.

Bevorzugt weist das Tragelement eine Montageöffnung auf, die an einer zu den Referenzflächen winkeligen Querseite des Tragelements vorgesehen ist. Beispielsweise erstreckt sich die vorgenannte Vertiefung oder Aussparung, an der die Referenzflächen vorgesehen sind, von einer Seite des Tragelements weg, während die Montageöffnung an einer zu dieser Seite winkeligen Seite, beispielsweise einer Querseite des Tragelements, vorgesehen ist.

Es ist möglich, dass zwei einander gegenüberliegende Montageöffnungen vorgesehen sind, d.h. dass der mindestens eine Sensor und/oder eine zusätzliche Komponente des Sensors, zum Beispiel die Auswerteeinrichtung, wahlweise durch die eine Montageöffnung oder durch die gegenüberliegende Montageöffnung in der Sensoraufnahme oder der Aussparung angeordnet werden kann.

Eine Aussparung, Sensoraufnahme oder Ausdehnungskavität kann eine Durchgangsöffnung darstellen, das heißt dass sie das jeweilige Tragelement durchsetzt. Es ist aber auch möglich, dass die Aussparung, Sensoraufnahme oder Ausdehnungskavität sozusagen ein Sackloch oder jedenfalls eine blinde Aufnahme darstellt, also einen Boden aufweist und das Tragelement nicht durchsetzt. Beispielsweise kann die Aussparung, Sensoraufnahme oder Ausdehnungskavität aus dem jeweiligen Tragelement ausgefräst werden.

Bevorzugt ist es, wenn ein Sensorelement des mindestens einen Sensors mit mindestens einer Referenzfläche fest verbunden ist. Beispielsweise kann ein kapazitives, induktives oder optisches Sensorelement direkt mit der Referenzfläche verbunden sein. Es ist zum Beispiel möglich, einen Dehnungsmessstreifen mit einander gegenüberliegenden Referenzflächen der Aussparung zu verbinden, sodass dieser bei Belastung des Stützabschnitts und somit Veränderung des Abstands zwischen den Referenzflächen gedehnt oder gestaucht wird.

Die Verbindung muss aber nicht unmittelbar mit der Referenzfläche vorgesehen sein, d.h. dass das Sensorelement oder der Sensor nicht direkt an die Referenzfläche angeklebt an, angenietet oder dergleichen sein muss. Es ist auch möglich, dass der Sensor oder das Sensorelement an anderer Stelle ortsfest festgelegt ist, jedoch der Abstand zur Referenzfläche konstant ist oder fest ist. Dazu kann beispielsweise ein später noch erläutertes Trägerteil vorgesehen sein, der abseits von der Referenzfläche mit dem sich verformenden Tragelement verbunden ist und den Sensor oder das Sensorelement hält. Das Sensorelement oder der Sensor wird von dem Trägerteil bezüglich der Referenzfläche ortsfest gehalten, beispielsweise frontal vor der Referenzfläche.

Es ist ferner möglich, dass der mindestens eine Sensor sozusagen in den Abstand zwischen den Referenzflächen hinein misst, jedoch nicht zwischen den Referenzflächen angeordnet ist. Das kann beispielsweise auf optischen oder akustischen Wege geschehen.

Zweckmäßigerweise ist jeweils zwei einander zugeordneten Referenzflächen ein Sensorelement des mindestens einen Sensors zugeordnet oder an der jeweiligen Referenzfläche angeordnet. Zwischen den Sensorelementen ist ein Abstand vorhanden. Die Sensorelemente sind relativ zueinander frei beweglich, wenn sich die Referenzflächen bei der Verformung des Tragelements relativ zueinander bewegen.

Eine bevorzugte Ausführungsform der Erfindung sieht vor, dass ein jeweiliges Sensorelement oder ein Sensor nicht unmittelbar mit der Referenzfläche verbunden ist oder verbunden sein muss, sondern an einem Trägerteil angeordnet ist. Das Trägerteil weist zweckmäßigerweise einen Halteabschnitt zum Halten des Sensorelements oder Sensors auf. Das Sensorelement umfasst beispielsweise ein kapazitives und/oder induktives und/oder optisches Sensorelement. Der Halteabschnitt befindet sich beispielsweise frontal vor der Referenzfläche. Neben dem Halteabschnitt erstreckt sich ein Befestigungsabschnitt des Trägerteils. Dieser Befestigungsabschnitt seinerseits wiederum ist mit dem Tragelement, zum Beispiel dem Kupplungsarm, verbunden. Beispielsweise erstreckt sich die Durchtrittsöffnung für das Befestigungselement zu dem Befestigungsabschnitt des Trägerteils für den Sensor, sodass durch die Durchtrittsöffnung hindurch eine Schraube oder ein sonstiges Befestigungselement mit dem Befestigungsabschnitt verbunden werden kann.

Bevorzugt hat das Trägerteil eine winkelige, insbesondere L-förmige Gestalt.

Das Trägerteil kann einen Bestandteil des Sensors bilden. Es ist beispielsweise möglich, dass eine Sensorfläche, zum Beispiel eine kapazitive Fläche oder Elektrode, an dem Halteabschnitt unmittelbar angeordnet ist.

Insbesondere ist die Referenzfläche an einer freien Stirnseite eines Armabschnitts vorgesehen, der von dem Stützabschnitt absteht. Vor der freien Stirnseite ist das Sensorelement oder der Sensor angeordnet. Bevorzugt wird das Sensorelement oder der Sensor dabei von dem bereits erläuterten Trägerteil getragen oder gehalten.

Das Kraftfahrzeug kann ein Kraftfahrzeug mit Verbrennungsmotor, Elektromotor oder beidem sein. Insbesondere handelt es sich bei dem Kraftfahrzeug vorzugsweise um einen Personenkraftwagen.

Der mindestens eine Sensor ist vorzugsweise als ein Sensormodul ausgestaltet oder weist ein Sensormodul auf.

Das Sensormodul bildet also eine Baueinheit, die an dem Kupplungsarm anordenbar ist. Die Außenumfangskontur des Sensormoduls, beispielsweise eines Gehäuses des Sensormoduls, passt in oder zur Innenumfangskontur der Vertiefung an dem Kupplungsarm, beispielsweise für eine formschlüssige Aufnahme.

Einen weiteren vorteilhaften Aspekt stellt es dar, wenn das Sensormodul ein Sensorgehäuse aufweist, in welchem der mindestens eine Sensor angeordnet ist. In dem Sensorgehäuse können auch Sensorteile angeordnet sein, die bei der Montage des Sensormoduls am Kupplungsarm individuell in Kontakt mit dem Kupplungsarm gelangen, beispielsweise ein erstes Sensorteil und ein zweites Sensorteil. Die Sensorteile sind zweckmäßigerweise trotz der Anordnung in dem Sensorgehäuse bei einer Verformung des Kupplungsarms relativ zueinander beweglich, sodass sie unterschiedliche Abstände zueinander haben können und auf diesem Wege eine Verformung des Kupplungsarms durch eine entsprechende Abstandsmessung, beispielsweise eine kapazitive, optische oder induktive, Abstandsmessung, durch das Sensormodul durchgeführt werden kann.

Der Kupplungsarm kann an einer am Kraftfahrzeug zu befestigenden oder befestigten Halterung fest angeordnet sein, also unlösbar, beispielsweise verschraubt oder mit dieser verschweißt. Weiterhin ist eine Steckverbindung zwischen Kupplungsarm und Halterung möglich. Schließlich kann der Kupplungsarm an der Halterung auch beweglich gelagert sein, beispielsweise anhand eines Schwenklagers schwenkbeweglich und/oder eines Schiebelagers schiebebeweglich.

Am freien Endbereich des Kupplungsarms befindet sich zweckmäßigerweise ein Kuppelstück, beispielsweise eine Kupplungskugel oder auch ein sonstiges Formstück, das zum Anhängen eines Anhängers geeignet ist. Selbstverständlich kann das Kuppelstück auch zum Ankuppeln eines Lastenträgers geeignet sein, das heißt der Kupplungsarm gemäß der Erfindung kann auch dazu vorgesehen sein, einen Lastenträger zu tragen. Beispielsweise befindet sich dann am freien Endbereich des Kupplungsarms ein Steckvorsprung oder eine Steckaufnahme.

Nachfolgend wird die Erfindung anhand eines Ausführungsbeispiels näher erläutert. Es zeigen
- Figur 1: Seitenansicht einer Anhängekupplung, von der in
- Figur 2: ein Detail A dargestellt ist,
- Figur 3: eine perspektivische Schrägansicht eines Kupplungsarms der Anhängekupplung gemäß Figur 1, von der in
- Figur 4: ein Ausschnitt B dargestellt ist,
- Figur 5: eine schematische Frontalansicht auf eine Trägeranordnung sowie einen Halter für einen Kupplungsarm der Anhängekupplung gemäß der vorstehenden Figuren,
- Figur 6: ein schematisches Ausführungsbeispiel, bei der die eine Dehnung des Tragelements indizierende Aussparung, die sensorisch erfasst wird, neben einem zungenartigen Element des Tragelements vorgesehen ist,
- Figur 7: eine perspektivische Schrägansicht eines weiteren Ausführungsbeispiels, bei dem ein Kupplungsarm bezüglich einer fahrzeugseitigen Achse beweglich gelagert ist,
- Figur 8: ein Detail C aus Figur 7, und
- Figur 9: das Detail C gemäß Figuren 7 und 8 in Seitenansicht.

Eine Anhängekupplung 10 weist einen Kupplungsarm 11 auf, der mit einem Steckabschnitt 16 an einer fahrzeugseitigen Halterung 80 befestigbar ist. Die Halterung 80 weist eine Steckaufnahme 81 zum Einstecken des Steckabschnitts 16 auf. Der Kupplungsarm 11 ist mit einer Verriegelungseinrichtung 17 mit der Halterung 80 verriegelbar. Die Verriegelungseinrichtung 17 umfasst einen in der Zeichnung nicht dargestellten Verdrängerkörper, beispielsweise Sperrbolzen, der in einer Führung 19 des Kupplungsarms 11 verschieblich aufgenommen ist. Der Verdrängerkörper verdrängt ebenfalls nicht dargestellte Sperrkörper, beispielsweise Kugeln, durch Öffnungen 18 nach radial außen vor den Steckabschnitt 16, wo sie in mindestens eine Verriegelungsaufnahme 82, insbesondere eine Rinne, der Halterung 80 eingreifen.

Zur weiteren Abstützung und zum Halt des Kupplungsarms 11 an der Halterung 80 tragen weiterhin Formschlusskonturen 29, beispielsweise Keilschrägen, seitlich am Steckabschnitt 16 bei, die in korrespondierende Formschlussaufnahmen 83 der Halterung 80 formschlüssig eingreifen. Die durch die Öffnungen 18 nach außen treten den Verriegelungskörper ziehen den Steckabschnitt 16 sozusagen in die Steckaufnahme 81 hinein, dabei gleichzeitig die Formschlusskonturen 29 in die Formschlussaufnahmen 83, sodass der Kupplungsarm 11 an der Halterung 80 einen festen Halt hat.

Die Halterung 80 ist an einem schematisch dargestellten Querträger 90 befestigt, der seinerseits wiederum am Heck des Kraftfahrzeugs 100 befestigt ist. Das Kraftfahrzeug 100 ist beispielsweise ein Pkw. Der Querträger 90 verläuft quer am Heck des Kraftfahrzeugs 100. Der Querträger 90 und die Halterung 80 können Bestandteile der Anhängekupplung 10 bilden. Alternativ zu dieser Konstruktion wäre beispielsweise möglich, dass der Kupplungsarm 11 fest am Querträger 90 befestigt ist, beispielsweise verschraubt oder dergleichen. Weiterhin ist auch eine bewegliche Lagerung des Kupplungsarms 11 bezüglich des Kraftfahrzeugs 100, insbesondere des Querträgers 90 möglich, wofür dann ein Schwenklager und/oder Schiebelager zwischen dem Kupplungsarm 11 und dem Querträger 90 oder einer sonstigen den Kupplungsarm 11 tragenden Komponente möglich ist (nicht dargestellt). Schließlich sei noch am Rande erwähnt, dass anstelle des Kupplungsarms 11 auch ein sonstiges Tragelement, beispielsweise ein Tragarm für einen Lastenträger, vorgesehen sein kann. Auch ein solcher Tragarm oder die vorgenannte Halterung, insbesondere auch das Schwenklager oder Schiebelager, können in der nachfolgend erläuterten Weise mit Aussparungen und zugeordnete Sensorik versehen sein, um Verformungen des jeweiligen Tragelements optimal zu erfassen.

Der Kupplungsarm 11 weist an seinem freien Endbereich ein Kuppelstück 12, beispielsweise eine Kupplungskugel auf. Der Endbereich des Kupplungsarms 11 befindet sich am Ende eines Krümmungsabschnitts 13. Zwischen dem Krümmungsabschnitt 13 und einem weiteren, sich an den Steckabschnitt 16 anschließenden Krümmungsabschnitt 15, befindet sich ein im Wesentlichen geradlinig verlaufender Armabschnitt 14 des Kupplungsarms 11.

Sämtliche der vorgenannten Abschnitte des Kupplungsarms 11, insbesondere aber der gerade verlaufende Armabschnitt 14, werden durch Beaufschlagung mit einer Last, beispielsweise eine Stützlast Pz in Achsrichtung einer Achse Z, oder einer Zuglast/Schublast Px in Richtung einer Achsrichtung X verformt. In besonderem Maße ist dies beim Armabschnitt 14 der Fall, aber auch bei den Krümmungsabschnitten 13, 15.

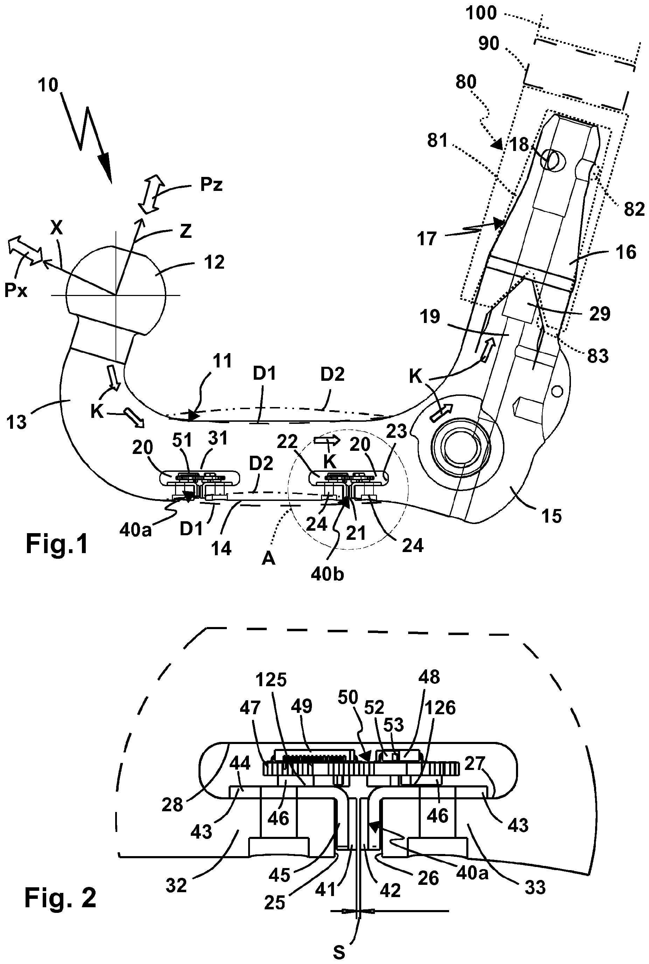

Eine Krafteinleitung auf das Kuppelstück 12 führt beispielsweise zu einem Kraftfluss K, der exemplarisch in Figur 1 eingezeichnet ist. Dadurch verformt sich der Kupplungsarm 11 beispielsweise entlang einer Krümmungslinie D1 oder einer Krümmungslinie D2, abhängig davon, ob eine positive oder negative Stützlast Pz auf das Kuppelstück 12 einwirkt.

Diese Verformung oder Krümmung des Kupplungsarms 11 wird durch die nachfolgend erläuterte Sensoranordnung mit Sensoren 40a, 40b erfasst.

An dem Kupplungsarm 11 sind in einem Längsabstand an dem Armabschnitt 14 Sensoren 40 angeordnet, die ihrerseits wiederum in Aussparungen 21 angeordnete Sensorelemente 41, 42 umfassen. Die Aussparungen 21 befinden sich an einer Unterseite 30 des Kupplungsarms 11.

Die Aussparungen 21 umfassen einander gegenüberliegende Wände, die Referenzflächen 25, 26 bilden. An diesen Referenzflächen 25, 26 sind die Sensorelemente 41, 42 zumindest indirekt angeordnet. Die Referenzflächen 25, 26 bewegen sich bei einer Verformung des Kupplungsarms 11, der ein Tragelement 60 der Anhängekupplung 10 bildet, zueinander hin oder voneinander weg, sodass ein Spalt S zwischen den Sensorelementen 41, 42 größer oder kleiner wird. Die Sensorelemente 41, 42 messen beispielsweise kapazitiv, induktiv, optisch oder dergleichen anders einen Abstand zwischen einander, also die Breite des Spaltes S. Dies ist zugleich ein Indikator für die Verformung des Kupplungsarms 11, also des Tragelements 60.

Neben der jeweiligen Aussparung 21 befindet sich eine Ausdehnungskavität 20. Die Aussparungen 21 und die Ausdehnungskavität 20 sind zueinander winkelig, beispielsweise rechtwinkelig. Die Aussparungen 21 und die jeweils zugeordneten Ausdehnungskavitäten 20 bilden eine insgesamt T-förmige Konfiguration.

Seitlich sind die Ausdehnungskavitäten 20 und die Aussparungen 21 offen, haben also einen einander entgegengesetzten Seiten des Kupplungsarms 11 Montageöffnungen 34, sodass die Sensoren 40a, 40b sowie die nachfolgend noch erläuterten Auswerteeinrichtungen 50 leicht montierbar und demontierbar sind. Mithin bilden die Sensoren 40a, 40b sowie die ihnen zugeordneten Auswerteeinrichtungen 50 Sensormodule oder jedenfalls kompakte Baueinheiten, die leicht montierbar und demontierbar sind.

Die Auswerteeinrichtungen 50 sind in den Ausdehnungskavitäten 20 angeordnet, die somit Sensoraufnahmen 22 bilden. Die Ausdehnungskavitäten 20 nehmen die Auswerteeinrichtungen 50 vorzugsweise vollständig auf, sodass sie nicht vor eine Außenoberfläche des Kupplungsarms 11 vorstehen und somit optimal geschützt sind.

Die Sensorelemente 41, 42 sind an Trägerteilen 43 angeordnet, die eine winkelige Gestalt haben. Die Trägerteile 43 weisen Befestigungsabschnitte 44 sowie dazu winkelige Halteabschnitt 45 auf. Die Halteschenkel oder Halteabschnitt 45 tragen jeweils eines der Sensorelemente 41, 42. Mithin hängen also sozusagen die beiden Halteabschnitte 45 vor den jeweiligen Referenzflächen 25, 26.

An den Befestigungsabschnitten 44 sind die Trägerteile mit dem Kupplungsarm 11 verbunden, nämlich beispielsweise verschraubt, vernietet oder dergleichen. Beispielsweise durchdringen in der Zeichnung nicht dargestellte Schrauben Durchtrittsöffnungen 24, die mit der Ausdehnungskavität 20 oder der Sensoraufnahme 22 kommunizieren. Die Schrauben sind in die Befestigungsabschnitte 44 eingeschraubt, sodass diese mit einer Bodenfläche 27 der Sensoraufnahme 22 verbunden sind.

Mit einer der Bodenfläche 27 gegenüberliegenden Deckenfläche 28 der Sensoraufnahme 22 haben jedoch die Sensoren 40a, 40b und die Auswerteeinrichtungen 50 keinen Kontakt, sondern einen Abstand. Das gilt auch für Längsendbereiche 23 der Sensoraufnahme 22, von denen die Trägerteile 43, als auch die Auswerteeinrichtung 50 einen Abstand haben. Mithin beschränkt sich also der Kontakt der Sensoren 40a, 40b und der Auswerteeinrichtung 50 sozusagen auf den Bodenbereich 27.

Die Auswerteeinrichtungen 50 und die Sensoren 40a, 40b sind jedoch nicht mit einem sich entlang der Deckenfläche 28 erstreckenden Stützabschnitt 31 des Tragelements 60 oder Kupplungsarms 11 in Kontakt. Dieser Stützabschnitt 31 kann sich sozusagen frei verformen, wenn der Kupplungsarm 11 belastet wird, beispielsweise durch die Stützlast Pz, die Zuglast Px oder auch in Querrichtung dazu, nämlich in der sogenannten Fahrzeugquerrichtung, in Richtung einer Y-Achse mit einer Kraft Py.

Neben der Sensoraufnahme 22 bzw. der Ausdehnungskavität 20 erstrecken sich sozusagen Arme 33, 32, deren Außenseite von der Unterseite 30 des Kupplungsarms 11 gebildet sind, deren Innenseiten jedoch der Ausdehnungskavität 20 zugeordnet ist und die Befestigungsabschnitte 44 der Trägerteile 43 tragen.

Die Referenzflächen 25, 26 werden von den freien Stirnseiten der Arme 32, 33 gebildet oder sind daran angeordnet.

An dieser Stelle sei bemerkt, dass selbstverständlich die Sensorelemente 41, 42 unmittelbar an den Referenzflächen 26 angeordnet sein könnten, beispielsweise angeklebt, oder in sonstiger Weise mit an den jeweiligen Referenzflächen 25, 26 verbunden sein können.

Die Auswerteeinrichtungen 50 umfassen einen Träger 47, beispielsweise eine elektrische Leiterplatte oder Platine, an der Auswerteelemente, beispielsweise ein Mikroprozessor 49, Messelemente 48, ein Buskoppler 51 oder dergleichen andere Elemente zur Auswertung von Sensorsignalen der Sensorelemente 41, 42 angeordnet sind.

Die Auswerteeinrichtungen 50 können Sensorelemente 41, 42 auswerten. Dazu ist beispielsweise in einem Speicher 52 ein Auswerteprogramm 53 gespeichert, welches Programmcode aufweist, der vom Mikroprozessor 49 ausführbar ist.

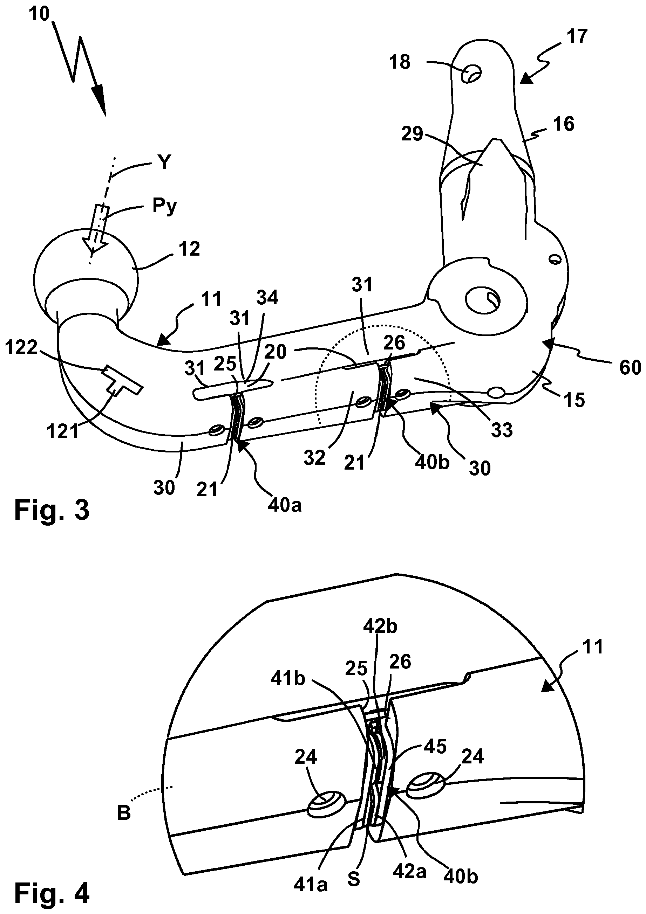

Insbesondere zur Auswertung der in Querrichtung wirkenden Kraft Py ist es vorteilhaft, wenn in einem jeweiligen Schlitz oder einer Aussparung 21 in Längsrichtung der Aussparung 21 mehrere Sensorelemente, beispielsweise kapazitive oder induktive, Sensorelemente angeordnet sind. So sind beispielsweise bei der Anordnung gemäß Figur 4 entlang des Spaltes S einerseits Sensorelemente 41a, 41b und gegenüberliegend andererseits weitere Sensorelemente 42a, 42b angeordnet. Bei einer Querbelastung des Kupplungsarms 11, also des Tragelements 60, in Richtung Y (Kraft Py) wird das Tragelement 60 oder der Kupplungsarm 11 sozusagen bezüglich der Achse X verformt, wodurch beispielsweise die Sensorelemente 41a und 42a einen anderen Abstand zueinander haben als die Sensorelemente 41b und 42b. Das wertet dann die Auswerteeinrichtung 50 entsprechend aus.

An dieser Stelle sei bemerkt, dass es zwar vorteilhaft ist, wenn sich eine Aussparung wie beispielsweise die Aussparung 21 von der Außenoberfläche, beispielsweise der Unterseite 30 weg, erstreckt. Das muss aber nicht sein. Es sind beispielsweise auch sozusagen im Kernbereich des Kupplungsarms 11, also eines Tragelements 60, Aussparungen möglich, die erfindungsgemäß ausgestaltet sind. Das ist exemplarisch in Figur 3 in Gestalt einer Aussparung 121 angedeutet. Die Aussparung 121 kommuniziert mit einer Ausdehnungskavität 122, sodass eine ähnliche Konfiguration wie bei der Aussparung 21 und der Ausdehnungskavität 22 gegeben ist.

Weiterhin sei erwähnt, dass selbstverständlich auch der Halter 80 oder der Querträger 90 mit einer erfindungsgemäßen Sensorik ausgestattet sein können, wenn entsprechende Aussparungen vorgesehen sind.

An einem in Figur 2 zusätzlich eingezeichneten Ausführungsbeispiel wird weiterhin deutlich, dass auch innerhalb der Ausdehnungskavität 20 befindliche Referenzflächen 125, 126 frei vom Kraftfluss durch den Stützabschnitt 31 sind. Die Sensorelemente 41, 42 bzw. die die Sensorelemente 41, 42 tragenden Trägerteile 43 sind mit diesen Referenzflächen 125, 126 verbunden, beispielsweise verklebt und/oder anhand der Verschraubung durch die Durchtrittsöffnungen 24 hindurch. Somit bewegen sich die Sensorelemente 41, 42 synchron zu einer Bewegung der Referenzflächen 125, 126, so dass sie eine Relativbewegung der Referenzflächen 125, 126 erfassen können. An diesem Beispiel wird auch deutlich, dass die Referenzflächen 125, 126 nicht einander unmittelbar gegenüberliegend sein müssen, sondern beispielsweise auch nebeneinander angeordnet sein können.

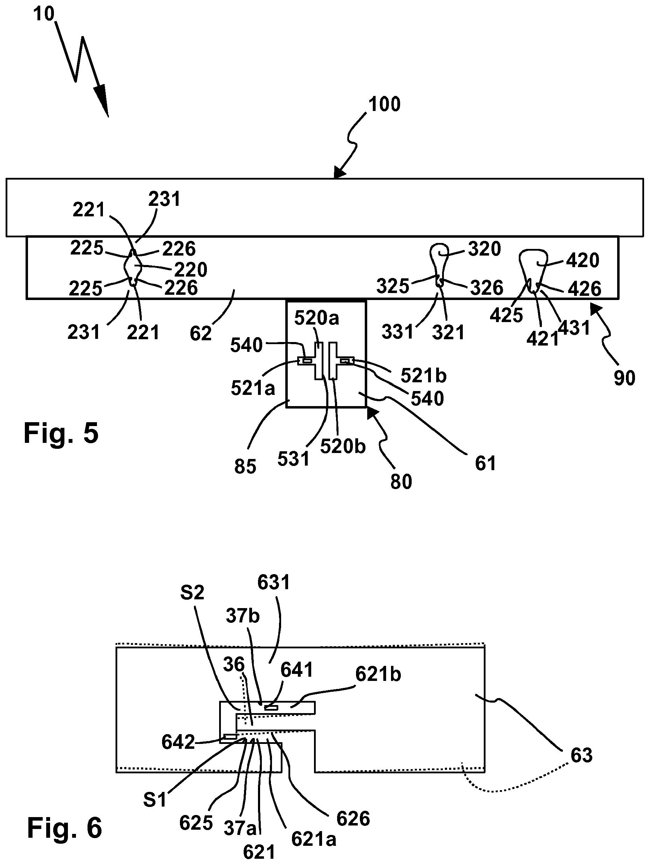

Ein schematisch zu verstehendes Ausführungsbeispiel ist in Figur 5 dargestellt. Beispielsweise sind am Querträger 90, der ein Tragelement 62 bildet, Aussparungen 221 vorgesehen, zwischen denen sich eine Ausdehnungskavität 220 befindet. An einer jeweiligen Aussparung 221 vorbei verläuft ein Stützabschnitt 231 des Querträgers 90. Die Aussparungen 221 beißen jeweils einander gegenüberliegende Referenzflächen 225, 226 auf, denen in der Zeichnung nicht dargestellte Sensoren oder Sensorelemente, beispielsweise die Sensorelemente 41, 42, zugeordnet sind.

Am Querträger 90 ist exemplarisch auch noch eine schlüssellochartige Kontur vorgesehen, deren unterer Bereich eine Aussparung 321 bildet, die einander gegenüberliegende Referenzflächen 325, 326 aufweist. Dort können ebenfalls Sensorelemente in der Art der Sensorelemente 41, 42 vorgesehen sein. Der sozusagen breitere oder weitere Bereich dieses Schlüssellochs bildet eine Ausdehnungskavität 320. Bei einer Verformung eines sich neben der Aussparung 321 erstreckenden Stützabschnitts 331 wird die Aussparung 321 breiter oder enger, was die geeignete Sensorik, Beispielseite der Sensor 40a, 40b, entsprechend erfasst.

Eine im Wesentlichen dreieckförmige Aussparung ist weiter rechts am Querträger 90 exemplarisch dargestellt. Die dreieckförmige Aussparung weist einen schmaleren, unteren Bereich auf, der als Aussparung 421 mit Referenzflächen 425, 426 sozusagen die Messkavität darstellt. Der obere Bereich der Aussparung ist weiter oder breiter und bildet eine Ausdehnungskavität 420. Wenn sich ein Stützabschnitt 431 neben der Aussparung 421 verformt, ändert sich die Querbreite der Aussparung 421 und somit der Abstand zwischen den Referenzflächen 425, 426. Den Referenzflächen 425, 426 kann beispielsweise ein kapazitives, induktives oder dergleichen anderes zur Messung eines Abstands geeignetes Sensorelement, zum Beispiel in der Art des Sensors 40a, 40b, zugeordnet sein.

In der Halterung 80 oder an der Halterung 80, die Tragelement 61 bildet, können auch in erfindungsgemäßer Weise Sensoren zur Dehnungsmessung oder Stauchungsmessung, also der Verformung des Tragelements 61, vorgesehen sein. Die Halterung 80 weist beispielsweise ein Aufnahmegehäuse 85 mit der Steckaufnahme 81 auf. An dem Aufnahmegehäuse 85 sind sozusagen an einander entgegengesetzten Seiten eines Stützabschnitts 531 sozusagen spiegelverkehrt jeweils eine Aussparung 521a, 521b angeordnet, in denen nicht dargestellte, einander gegenüberliegende Referenzflächen für beispielsweise den Sensor 40a, 40b oder die Sensorelemente 41, 42 vorgesehen sind. Unmittelbar benachbart zum Stützabschnitt 531 sind jeweils Ausdehnungskavitäten 520a und 520b vorgesehen. Wenn sich also die Halterung 80 bei Belastung verformt, sodass sich der Stützabschnitt 531 krümmt, werden die sozusagen schlitzartigen Aussparungen 521a, 521b enger oder breiter. In den Aussparungen 521a, 521b können beispielsweise Piezoelemente als Sensoren 540 vorgesehen sein. Wenn sich eine jeweilige Aussparung 521 verengt, kommt das Piezoelement Unterdruck und erzeugt eine Spannung, die durch die Auswerteeinrichtung 50 oder eine sonstige Auswerteeinrichtung gemessen werden kann.

Nur am Rande sei erwähnt, dass bei all den vorgenannten Ausführungsbeispielen in der Zeichnung, aber auch bei einer sonstigen erfindungsgemäßen Anhängekupplung, der jeweilige Sensor oder die Auswerteeinrichtung drahtgebunden oder drahtlos oder beides mit beispielsweise einem Bordnetz des Kraftfahrzeugs kommunizieren kann. Vorzugsweise weist der Sensor diese Auswerteeinrichtungen dazu, beispielsweise einen Buskoppler, einen Leitungsanschluss, eine Funkschnittstelle oder dergleichen, auf.

Alternativ wäre es auch denkbar, dass beispielsweise die Arme 32, 33 bei einer Belastung des Stützabschnitts 31 eine Art Scherbewegung oder Schwenkbewegung machen. In der Zeichnung nicht dargestellt ist eine Variante, bei der beispielsweise die Referenzflächen voneinander weg schwenken oder zueinander hin schwenken.

Die erfindungsgemäß im Wesentlichen oder ganz von Kraftfluss freie Aussparung kann aber auch beispielsweise eine Art Zunge oder Zungenindikator umfassen. Dies ist im Ausführungsbeispiel gemäß Figur 6 angedeutet.

An einem Tragelement 63 (schematisch angedeutet), beispielsweise einer Kupplungsstange oder einem Kupplungsarm, einem Querträger, einer fahrzeugseitigen Halterung zum Halten eines Kupplungsarms oder dergleichen, ist eine labyrinthartige Aussparung 621 vorgesehen. In der Aussparung 621 mit Abschnitten 621a und 621b ist ein zungenartiges, in die Aussparung 621 vorstehendes Indikatorelement 36 vorgesehen. Bei einer Verformung des Tragelements 63 (in gestrichelten Linien angedeutet) bewegt sich das Indikatorelement 36 in der Aussparung 621 hin und her. Dadurch können beispielsweise Sensoren 641 und 642, die den Abschnitten 621b und 621a zugeordnet sind, unterschiedliche Abstände S1 und S2 zwischen dem Indikatorelement 36 und den benachbarten Wänden 37a, 37b der Aussparung 621 messen. Beispielsweise bilden Seitenflächen des Indikatorelements 36 und die zugeordnete Wand 37a oder 37b die Referenzflächen 625, 626, deren Relativabstand durch die Sensoren 641, 642 erfassbar ist. Die Aussparung 621 verläuft neben einem Stützabschnitt 631 des Tragelements 63. Man erkennt, dass die Sensoren 641, 642 nicht unmittelbar in den Abständen S1 oder S2 angeordnet sein müssen, wie beispielsweise beim Sensorelement oder Sensor 642 der Fall.

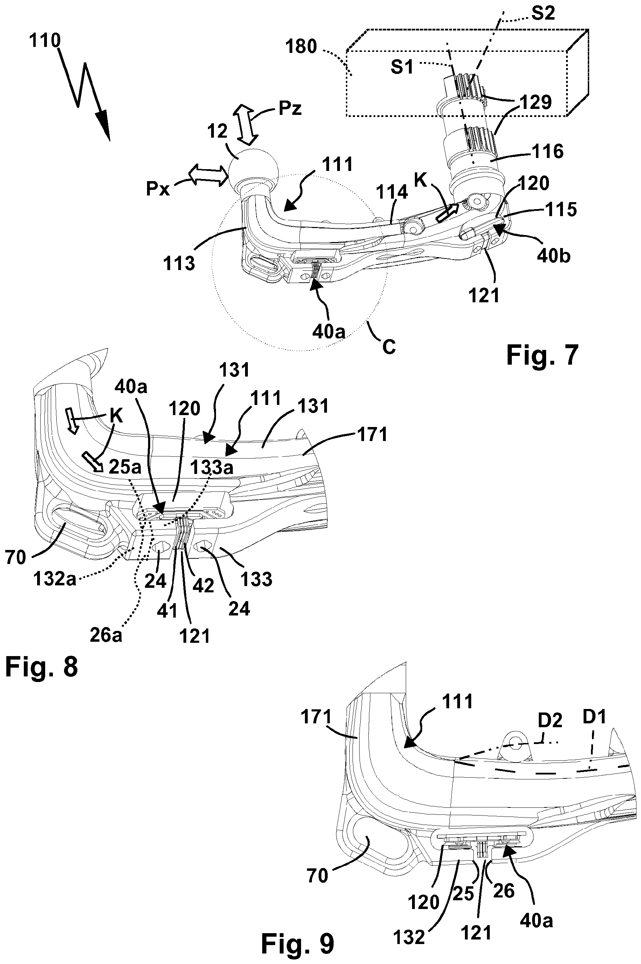

Bei einem in den Figuren 7 bis 9 dargestellten Ausführungsbeispiel ist ein Kupplungsarm 111 bezüglich einer fahrzeugseitigen Halterung 180 schwenkbar gelagert, beispielsweise um eine Schwenkachse S1 und/oder eine Schwenkachse S2. Alternativ oder ergänzend wäre auch eine Schiebelagerung des Kupplungsarms 111 ohne weiteres möglich.

Der Kupplungsarm 111 greift mit einem Lagerabschnitt 116 in die fahrzeugseitige Halterung 180 ein, wo entsprechende Lagerelemente zur Lagerung des Kupplungsarms 111 vorgesehen sind. An dem Lagerabschnitt 111 sind beispielsweise Verzahnungen oder Zahnkonturen 129 vorgesehen, mit denen der Kupplungsarm 111 relativ zur fahrzeugseitigen Halterung 180 antreibbar und/oder verriegelbar ist.

Der Kupplungsarm 111 weist an seinem freien Endbereich ein Kuppelstück 12 auf, das sich am Ende eines Krümmungsabschnitts 113 befindet. Zwischen dem Krümmungsabschnitt 113 und einem weiteren, sich an den Lagerabschnitt 116 anschließenden Krümmungsabschnitt 115 befindet sich ein im Wesentlichen geradlinig verlaufender Abschnitt 114 des Kupplungsarms 111.

Die Halterung 180 kann in der bereits erläuterten Weise am Querträger 90 befestigt sein oder befestigt werden.

An dem Kupplungsarm 111 wird ebenfalls eine Verformungsmessung anhand einer Sensoranordnung vorgenommen, deren Sensoren 40a, 40b bereits erläutert worden sind. Eine Krafteinleitung auf das Kuppelstück 12 führt beispielsweise zu einem Kraftfluss K, der eine Verformung des Kupplungsarms bewirkt. Beispielsweise tritt diese Verformung dann auf, wenn eine Stützlast PZ in einer Kraftrichtung oder Achsrichtung Z auf den Kupplungsarm einwirkt. Es ist weiterhin eine Zuglast oder Schublast PX möglich, die ebenfalls zur Verformung des Kupplungsarms 111 führt. Somit kann sich der Kupplungsarm 111 ähnlich wie der Kupplungsarm 11 entlang der bereits erläuterten Krümmungslinien D2 oder D1 (schematisch in Figur 9 eingezeichnet) verformen.

Die Sensoren 40a, 40b umfassen in bereits erläuterter Weise die Sensorelemente 41, 42, die sich bei einer Verformung des Kupplungsarms 111 aufeinander zu oder voneinander weg bewegen.

Im Unterschied zum Kupplungsarm 11 sind jedoch Aussparungen 121 des Kupplungsarms 111 bezüglich des Kernbereichs des Kupplungsarms relativ weit außen, d.h. weniger tief im Grundmaterial des Kupplungsarms 111 verankert. Dennoch lässt sich erfolgreich eine Verformungsmessung durchführen, wie nachfolgend deutlich wird. Die Aussparungen 121 befinden sich neben einer Ausdehnungskavität 120.

Ähnlich wie bei den Aussparungen 21 ist bei den Aussparungen 121 jeweils noch eine Ausdehnungskavität 120 vorgesehen, die zusammen mit den Aussparungen 121 eine insgesamt T-förmige Konfiguration ausbildet.

In den Ausdehnungskavitäten 120 können die Auswerteeinrichtungen 50 aufgenommen werden, wozu in an sich bereits erläuterter Weise beispielsweise Durchtrittsöffnungen 24 für Schrauben vorgesehen sind.

Die Aussparungen 121 haben einander gegenüberliegende Referenzflächen 25, 26, wie bereits erläutert wurde. Bei einer entsprechenden Belastung des Kupplungsarms 111 bewegen sich die Referenzflächen 25, 26 aufeinander zu bzw. voneinander weg, was durch die Sensoren 40a, 40b erfassbar ist.

Auch wenn die Aussparungen 121 bzw. die Ausdehnungskavitäten 120 an einem radial weiter außenliegenden Bereich des Kupplungsarms 111 angeordnet sind als vergleichbar die Aussparungen 21 beim Kupplungsarm 11, ist dennoch ein optimaler Schutz der Sensoren 40a, 40b gegeben.

Arme 132, 133, die die Ausdehnungskavitäten 120 begrenzen, sind nämlich verhältnismäßig breit, so dass in der Ausdehnungskavität 120 ein jeweiliger Sensor 40a, 40b vollständig aufgenommen ist, also nicht vor den Außenumfang des Kupplungsarms 111 vorsteht.

Am Krümmungsabschnitt 113 ist vorzugsweise noch eine Abreißöse 70 vorgesehen, in die ein Abreißseil eingehängt werden kann. Die Abreißöse 70 ist integral mit dem Grundkörper 171 des Kupplungsarms 111 verbunden bzw. einstückig mit diesem.

Die Abreißöse 70 ist vorteilhaft mit dem Arm 132 einstückig und/oder fest verbunden, so dass dieser zusätzlich eine Abstützung durch die Abreißöse 70 erfährt.

Die Arme 133, 132 stehen vor einen Grundkörper 171 des Kupplungsarms 111 und somit vor einen Grundkörper des Stützabschnitts 131 des Kupplungsarms 111 seitlich vor. Es versteht sich, dass einer der Arme 131 oder 132 auch kürzer sein könnte.

In Figur 8 ist beispielhaft der Arm 132 sozusagen verkürzt zu einem Vorsprung 132a, dem der entsprechend längere Arm 133a gegenüberliegt. An den einander gegenüberliegenden Stirnseiten des Vorsprungs 132a und des Arms 133a sind beispielsweise die Referenzflächen 25a und 26a vorgesehen.

## Patentansprüche

1. Anhängekupplung für ein Kraftfahrzeug mit einem Kupplungsarm (11) zum Anhängen eines Anhängers oder zum Tragen eines Lastenträgers und mit mindestens einem Sensor (40a, 40b) zur Erfassung einer Verformung eines Tragelements (60-62) der Anhängekupplung (10), insbesondere des Kupplungsarms (11) oder einer Trägeranordnung zum Tragen oder Halten des Kupplungsarms (11), durch eine an dem Tragelement (60-62) angreifende Last, wobei an dem Tragelement (60-62) mindestens eine Aussparung (21) für den mindestens einen Sensor (40a, 40b) vorgesehen ist, wobei der mindestens eine Sensor (40a, 40b) zur Messung eines Abstands von Referenzflächen (25, 26) der mindestens einen Aussparung (21) vorgesehen ist, **dadurch gekennzeichnet, dass** sich die Referenzflächen (25, 26) bei der Verformung des Tragelements (60-62) aufeinander zu oder voneinander weg bewegen und sich quer zu einem sich bei der Belastung durch die Last verformenden Stützabschnitt (31) des Tragelements (60-62) erstrecken und/oder von einem Kraftfluss (K) durch den Stützabschnitt (31) des Tragelements (60-62) frei sind, der von dem Stützabschnitt (31) bei der Belastung durch die an dem Tragelement (60-62) angreifende Last übertragen wird.

2. Anhängekupplung (10) nach Anspruch 1, **dadurch gekennzeichnet, dass** sich die Referenzflächen (25, 26) längs oder quer zu einer Richtung eines Kraftflusses (K) durch den Stützabschnitt (31) erstrecken und/oder dass die Aussparung (21) eine Dehnungsfuge bildet oder umfasst und/oder dass mindestens eine der Referenzflächen (625, 626) an einem zungenartigen oder armartigen Indikatorelement (36) oder einem Vorsprung vorgesehen ist.

3. Anhängekupplung nach Anspruch 1 oder 2, **dadurch gekennzeichnet, dass** die mindestens eine Aussparung (21) an mindestens einem vor einen Grundkörper (171) des Tragelements (60-62) vorstehenden Vorsprung (132a) oder Indikatorelement (36) vorgesehen ist und/oder die mindestens eine Aussparung (21) eine sich von einer Öffnung an einer Außenoberfläche des Tragelements (60-62) weg erstreckende Vertiefung umfasst, wobei die Referenzflächen (25, 26) zweckmäßigerweise zur Öffnung winkelig, insbesondere orthogonal, sind.

4. Anhängekupplung nach einem der vorhergehenden Ansprüche, **dadurch gekennzeichnet, dass** die mindestens eine Aussparung (21) schlitzförmig ist, insbesondere eine Querbreite von weniger als 5 mm, bevorzugt weniger als 3 mm aufweist, und/oder sich über eine gesamte Querbreite des Tragelements (60-62) oder im Wesentlichen über eine gesamte Querbreite des Tragelements (60-62) erstreckt.

5. Anhängekupplung nach einem der vorhergehenden Ansprüche, **dadurch gekennzeichnet, dass** zwischen dem Stützabschnitt (31) und den Referenzflächen (25, 26) eine Ausdehnungskavität (20) angeordnet ist, deren Querbreite in einer Richtung parallel zu dem Abstand zwischen den Referenzflächen (25, 26) größer als der Abstand zwischen den Referenzflächen (25, 26) ist und/oder dass an entgegengesetzten Seiten des Stützabschnitts (31) jeweils eine Aussparung (21) angeordnet ist und/oder dass die Aussparung neben eine den Referenzflächen angeordnete verbreiterte Zone oder einen neben den angeordneten verbreiterten Nutboden aufweist.

6. Anhängekupplung nach Anspruch 5, **dadurch gekennzeichnet, dass** die mindestens eine Aussparung (21) und die Ausdehnungskavität (20) eine insgesamt T-förmige oder ovale oder eiförmige oder schlüssellochförmige Gestalt aufweisen.

7. Anhängekupplung nach einem der vorhergehenden Ansprüche, **dadurch gekennzeichnet, dass** die mindestens eine Aussparung (21) mit einer Sensoraufnahme (22) kommuniziert, in welcher eine Komponente des mindestens einen Sensors (40a, 40b), insbesondere eine Auswerteeinrichtung zur Auswertung mindestens eines Signals des mindestens einen Sensors (40a, 40b), angeordnet oder anordenbar ist.

8. Anhängekupplung nach einem der vorhergehenden Ansprüche, **dadurch gekennzeichnet, dass** die Sensoraufnahme (22) von der oder einer Ausdehnungskavität (20) gebildet ist oder die Ausdehnungskavität (20) bildet und/oder dass die Sensoraufnahme (22) mit mindestens einer Durchtrittsöffnung (24) kommuniziert, durch die ein Befestigungselement, insbesondere eine Schraube, zur Verbindung mit der in der Sensoraufnahme (22) angeordneten Komponente des mindestens einen Sensors (40a, 40b) durchsteckbar ist.

9. Anhängekupplung nach einem der vorhergehenden Ansprüche, **dadurch gekennzeichnet, dass** an dem Tragelement (60-62) mindestens zwei bezüglich einer Richtung eines Kraftflusses (K) durch den Stützabschnitt (31) hintereinander angeordnete Aussparungen (21) vorgesehen sind und/oder mindestens eine Aussparung (21) an einem Krümmungsabschnitt (115) oder einem im Wesentlichen geradlinig verlaufenden Abschnitt (14, 114) des Tragelements (60-62) angeordnet ist.

10. Anhängekupplung nach einem der vorhergehenden Ansprüche, **dadurch gekennzeichnet, dass** das Tragelement (60-62), insbesondere der Kupplungsarm (11), mindestens eine Montageöffnung (34) aufweist, die an einer zu den Referenzflächen (25, 26) winkeligen Querseite des Tragelements (60-62) vorgesehen ist.

11. Anhängekupplung nach einem der vorhergehenden Ansprüche, **dadurch gekennzeichnet, dass** ein insbesondere kapazitives oder induktives oder optisches Sensorelement (41, 42) des mindestens einen Sensors (40a, 40b) mit mindestens einer Referenzfläche (25, 26) fest verbunden ist und/oder zwei einander zugeordneten Referenzflächen (25, 26) jeweils ein Sensorelement (41, 42) zugeordnet ist, wobei die Sensorelemente (41, 42) einen Abstand zueinander aufweisen und relativ zueinander beweglich sind.

12. Anhängekupplung nach einem der vorhergehenden Ansprüche, **dadurch gekennzeichnet, dass** mindestens ein Sensorelement (41, 42) des mindestens einen Sensors (40a, 40b) an einem Halteabschnitt (45) eines Trägerteils (43) angeordnet ist, das einen sich neben dem Halteabschnitt (45) erstreckenden, insbesondere zu dem Halteabschnitt (45) winkeligen, Befestigungsabschnitt (44) aufweist, der mit einem Befestigungsbereich des Tragelements (60-62) neben der Referenzfläche (25, 26) verbunden ist.

13. Anhängekupplung nach einem der vorhergehenden Ansprüche, **dadurch gekennzeichnet, dass** das Trägerteil (43) eine L-förmige Gestalt aufweist und/oder der Halteabschnitt (45) und der Befestigungsabschnitt (44) von zueinander winkeligen Schenkeln des Trägerteils (43) gebildet sind.

14. Anhängekupplung nach einem der vorhergehenden Ansprüche, **dadurch gekennzeichnet, dass** an mindestens einer Referenzfläche (25, 26) der mindestens einen Aussparung (21) mindestens zwei Sensorelemente (41, 42) oder Sensoren (40a, 40b), insbesondere in einer ersten Reihenrichtung oder mindestens zwei zueinander winkeligen Reihenrichtungen, nebeneinander angeordnet sind.

15. Anhängekupplung nach einem der vorhergehenden Ansprüche, **dadurch gekennzeichnet, dass** der mindestens eine Sensor (40a, 40b) ein kapazitives Sensorelement (41, 42) und/oder ein induktives Sensorelement (41, 42) und/oder einen Dehnungsmessstreifen und/oder einen Abstandsensor und/oder ein optisches Sensorelement (41, 42) und/oder ein Piezoelement und/oder ein Sensorgehäuse aufweist, in welchem mindestens ein Sensorelement (41, 42), insbesondere einen Dehnungsmessstreifen oder eine kapazitive Messfläche, vor Umwelteinflüssen geschützt angeordnet sind und/oder dass sie mindestens eine Auswerteeinrichtung (50) zur Auswertung mindestens eines Sensorsignals des mindestens einen Sensors (40a, 40b) aufweist.

## Claims

1. Trailer coupling for a motor vehicle with a coupling arm (11) for attaching a trailer or for supporting a load carrier and with at least one sensor (40a, 40b) for detecting a deformation of a support element (60-62) of the trailer coupling (10), in particular the coupling arm (11) or a support assembly for supporting or holding the coupling arm (11), due to a load acting on the support element (60-62), wherein there is provided on the support element (60-62) at least one recess (21) for the sensor or sensors (40a, 40b), wherein the sensor or sensors (40a, 40b) is or are provided for measuring a distance between reference surfaces (25, 26) of the recess or recesses (21), **characterised in that** the reference surfaces (25, 26), during deformation of the support element (60-62), move towards or away from one another and extend transversely to a support section (31) of the support element (60-62) which deforms under loading by the load and/or are free from a force flow (K) through the support section (31) of the support element (60-62) which is transferred by the support section (31) during loading by the load acting on the support element (60-62).

2. Trailer coupling (10) according to claim 1, **characterised in that** the reference surfaces (25, 26) extend along or transversely to a direction of a force flow (K) through the support section (31) and/or that the recess (21) forms or comprises an expansion joint and/or that at least one of the reference surfaces (625, 626) is provided on a tongue-like or arm-like indicator element (36) or a projection.

3. Trailer coupling according to claim 1 or 2, **characterised in that** the recess or recesses (21) is or are provided on at least one projection (132a) or indicator element (36) protruding from a base body (171) of the support element (60-62), and/or the recess or recesses (21) comprises or comprise a recess extending away from an opening at an outer surface of the support element (60-62), wherein the reference surfaces (25, 26) are expediently at an angle to the opening, in particular orthogonal.

4. Trailer coupling according to any of the preceding claims, **characterised in that** the recess or recesses (21) is or are slot-like, in particular with a transverse width of less than 5 mm, preferably less than 3 mm, and/or extends or extend over a whole transverse width of the support element (60-62) or substantially over a whole transverse width of the support element (60-62).

5. Trailer coupling according to any of the preceding claims, **characterised in that** there is provided between the support section (31) and the reference surfaces (25, 26) an expansion cavity (20) with a transverse width in a direction parallel to the distance between the reference surfaces (25, 26) which is greater than the distance between the reference surfaces (25, 26), and/or that there is provided on each opposite side of the support section (31) a recess (21), and/or that the recess has a widened zone or a widened slot base next to one of the reference surfaces.

6. Trailer coupling according to claim 5, **characterised in that** the recess or recesses (21) and the expansion cavity (20) have an altogether T-shaped or oval or egg-shaped or keyhole-like shape.

7. Trailer coupling according to any of the preceding claims, **characterised in that** the recess or recesses (21) communicates or communicate with a sensor holder (22), in which a component of the sensor or sensors (40a, 40b), in particular an evaluation device for the evaluation of at least one signal of the sensor or sensors (40a, 40b), is or may be mounted.

8. Trailer coupling according to any of the preceding claims, **characterised in that** the sensor holder (22) is formed by the expansion cavity (20) or one of the expansion cavities (20) or forms the expansion cavity (20), and/or that the sensor holder (22) communicates with at least one through hole (24) through which a mounting element, in particular a screw, for connection with the component of the sensor or sensors (40a, 40b) located in the sensor holder (22), may be inserted.

9. Trailer coupling according to any of the preceding claims, **characterised in that** there are provided on the support element (60-62) at least two recesses (21) arranged one behind the other with respect to a direction of a force flow (K) through the support section (31), and/or at least one recess (21) is provided on a curved section (115) or a section (14, 114) of the support element (60-62) running substantially in a straight line.

10. Trailer coupling according to any of the preceding claims, **characterised in that** the support element (60-62), in particular the coupling arm (11), has at least one mounting hole (34), which is provided on a transverse side of the support element (60-62) at an angle to the reference surfaces (25, 26).

11. Trailer coupling according to any of the preceding claims, **characterised in that** a sensor element (41, 42), in particular capacitive or inductive or optical, of the sensor or sensors (40a, 40b) is firmly connected to at least one reference surface (25, 26), and/or a sensor element (41, 42) is assigned to each of two reference surfaces (25, 26) assigned to one another, wherein the sensor elements (41, 42) have clearance between them and are movable relative to one another.

12. Trailer coupling according to any of the preceding claims, **characterised in that** at least one sensor element (41, 42) of the sensor or sensors (40a, 40b) is mounted on a holding section (45) of a support member (43) which has a mounting section (44) extending next to the holding section (45), in particular at an angle to the holding section (45), and which is connected to a mounting area of the support element (60-62) next to the reference surface (25, 26).

13. Trailer coupling according to any of the preceding claims, **characterised in that** the support member (43) has an L-shape and/or the holding section (45) and the mounting section (44) are formed by arms of the support member (43) at an angle to one another.

14. Trailer coupling according to any of the preceding claims, **characterised in that**, on at least one reference surface (25, 26) of the recess or recesses (21), at least two sensor elements (41, 42) or sensors (40a, 40b) are arranged next to one another, in particular in a first row direction or at least two row directions at an angle to one another.

15. Trailer coupling according to any of the preceding claims, **characterised in that** the sensor or sensors (40a, 40b) has or have a capacitive sensor element (41, 42) and/or an inductive sensor element (41, 42) and/or a strain gauge and/or a distance sensor and/or an optical sensor element (41, 42) and/or a piezo element and/or a sensor housing, in which at least one sensor element (41, 42), in particular a strain gauge or a capacitive measuring surface are protected from environmental effects, and/or it or they has or have an evaluation device (50) for the evaluation of at least one sensor signal of the sensor or sensors (40a, 40b).

## Revendications

1. Attelage de remorque pour un véhicule automobile avec un bras d'attelage (11) pour atteler une remorque ou pour supporter un support de charges et avec au moins un capteur (40a, 40b) pour détecter une déformation d'un élément porteur (60 - 62) de l'attelage de remorque (10), en particulier du bras d'attelage (11) ou d'un ensemble de support pour supporter ou maintenir le bras d'attelage (11), par une charge s'engageant au niveau de l'élément porteur (60 - 62), dans lequel au moins un évidement (21) est prévu pour l'au moins un capteur (40a, 40b) au niveau de l'élément porteur (60-62), dans lequel l'au moins un capteur (40a, 40b) est prévu pour mesurer un espace entre des surfaces de référence (25, 26) de l'au moins un évidement (21), **caractérisé en ce que** les surfaces de référence (25, 26) se déplacent les unes vers les autres ou de manière à s'éloigner les unes des autres lors de la déformation de l'élément porteur (60 - 62) et s'étendent de manière transversale par rapport à une section d'appui (31), se déformant lors de la contrainte exercée par la charge, de l'élément porteur (60 - 62) et/ou sont sans flux de force (K) par la section d'appui (31) de l'élément porteur (60 - 62), qui est transmis par la section d'appui (31) lors de la contrainte exercée par la charge s'engageant au niveau de l'élément porteur (60 - 62).

2. Attelage de remorque (10) selon la revendication 1, **caractérisé en ce que** les surfaces de référence (25, 26) s'étendent le long de ou de manière transversale à une direction d'un flux de force (K) par la section d'appui (31), et/ou que l'évidement (21) forme ou comprend un joint de dilatation, et/ou qu'au moins une des surfaces de référence (625, 626) est prévue au niveau d'un élément indicateur (36) de type languette ou de type bras ou au niveau d'une saillie.

3. Attelage de remorque selon la revendication 1 ou 2, **caractérisé en ce que** l'au moins un évidement (21) est prévu au niveau d'au moins une saillie (132a) ou d'un élément indicateur (36) faisant saillie devant un corps de base (171) de l'élément porteur (60 - 62), et/ou l'au moins un évidement (21) comprend un renfoncement s'étendant de manière à s'éloigner d'une ouverture au niveau d'une surface extérieure de l'élément porteur (60 - 62), dans lequel les surfaces de référence (25, 26) sont de manière appropriée angulaires, en particulier orthogonales, par rapport à l'ouverture.

4. Attelage de remorque selon l'une quelconque des revendications précédentes, **caractérisé en ce que** l'au moins un évidement (21) est en forme d'entaille, en particulier présente une largeur transversale inférieure à 5 mm, de manière préférée inférieure à 3 mm, et/ou s'étend sur une largeur transversale totale de l'élément porteur (60 - 62) ou sensiblement sur une largeur transversale totale de l'élément porteur (60 - 62).

5. Attelage de remorque selon l'une quelconque des revendications précédentes, **caractérisé en ce qu'**est disposée entre la section d'appui (31) et les surfaces de référence (25, 26) une cavité d'allongement (20), dont la largeur transversale est plus grande dans une direction de manière parallèle par rapport à l'espacement entre les surfaces de référence (25, 26) que l'espacement entre les surfaces de référence (25, 26), et/ou que respectivement un évidement (21) est disposé au niveau de côtés opposés de la section d'appui (31), et/ou que l'évidement présente une zone élargie disposée à côté des surfaces de référence ou un fond de rainure élargi disposé à côté des surfaces de référence.

6. Attelage de remorque selon la revendication 5, **caractérisé en ce que** l'au moins un évidement (21) et la cavité d'allongement (20) présentent une forme globalement en forme de T ou ovale ou en forme d'œufs ou en forme de trou de serrure.

7. Attelage de remorque selon l'une quelconque des revendications précédentes, **caractérisé en ce que** l'au moins un évidement (21) communique avec un logement de capteur (22), dans lequel un composant de l'au moins un capteur (40a, 40b), en particulier un dispositif d'évaluation pour évaluer au moins un signal de l'au moins un capteur (40a, 40b) est disposé ou peut être disposé.

8. Attelage de remorque selon l'une quelconque des revendications précédentes, **caractérisé en ce que** le logement de capteur (22) est formé par la ou une cavité d'allongement (20) ou forme la cavité d'allongement (20), et/ou que le logement de capteur (22) communique avec au moins une ouverture de passage (24), à travers laquelle un élément de fixation, en particulier une vis, destiné à être relié au composant, disposé dans le logement de capteur (22), de l'au moins un capteur (40a, 40b) peut être enfiché.

9. Attelage de remorque selon l'une quelconque des revendications précédentes, **caractérisé en ce qu'**au moins deux évidements (21) disposés l'un derrière l'autre par rapport à une direction d'un flux de force (K) à travers la section d'appui (31) sont prévus au niveau de l'élément porteur (60 - 62) et/ou au moins un évidement (21) est disposé au niveau d'une section d'incurvation (115) ou d'une section (14, 114), s'étendant de manière sensiblement rectiligne, de l'élément porteur (60 - 62).

10. Attelage de remorque selon l'une quelconque des revendications précédentes, **caractérisé en ce que** l'élément porteur (60 - 62), en particulier le bras d'attelage (11), présente au moins une ouverture de montage (34), qui est prévue au niveau d'un côté transversal angulaire par rapport aux surfaces de référence (25, 26) de l'élément porteur (60 - 62).

11. Attelage de remorque selon l'une quelconque des revendications précédentes, **caractérisé en ce qu'**un élément de capteur (41, 42) en particulier capacitif ou inductif ou optique de l'au moins un capteur (40a, 40b) est relié de manière solidaire à au moins une surface de référence (25, 26) et/ou respectivement un élément de capteur (41, 42) est associé à deux surfaces de référence (25, 26) associées l'une à l'autre, dans lequel les éléments de capteur (41, 42) présentent un espacement les uns par rapport aux autres et sont mobiles les uns par rapport aux autres.

12. Attelage de remorque selon l'une quelconque des revendications précédentes, **caractérisé en ce qu'**au moins un élément de capteur (41, 42) de l'au moins un capteur (40a, 40b) est disposé au niveau d'une section de maintien (45) d'une partie de support (43), qui présente une section de fixation (44) s'étendant à côté de la section de maintien (45), en particulier angulaire par rapport à la section de maintien (45), qui est relié à une zone de fixation de l'élément porteur (60 - 62) à côté de la surface de référence (25, 26).

13. Attelage de remorque selon l'une quelconque des revendications précédentes, **caractérisé en ce que** la partie de support (43) présente une forme en L et/ou la section de maintien (45) et la section de fixation (44) sont formées par des branches angulaires les unes par rapport aux autres de la partie de support (43).

14. Attelage de remorque selon l'une quelconque des revendications précédentes, **caractérisé en ce qu'**au moins deux éléments de capteur (41, 42) ou capteurs (40a, 40b) sont disposés côte à côte en particulier dans une première direction d'alignement ou dans au moins deux directions d'alignement angulaires l'une par rapport à l'autre au niveau d'au moins une surface de référence (25, 26) de l'au moins un évidement (21).

15. Attelage de remorque selon l'une quelconque des revendications précédentes, **caractérisé en ce que** l'au moins un capteur (40a, 40b) présente un élément de capteur (41, 42) capacitif et/ou un élément de capteur (41, 42) inductif et/ou une jauge de contrainte et/ou un capteur d'espacement et/ou un élément de capteur (41, 42) optique et/ou un élément piézoélectrique et/ou un boîtier de capteur, dans lequel sont disposés au moins un élément de capteur (41, 42), en particulier une jauge de contrainte ou une surface de mesure capacitive, avec une protection contre les influences extérieures, et/ou qu'il présente au moins un système d'évaluation (50) pour évaluer au moins un signal de capteur de l'au moins un capteur (40a, 40b).
